# EUROPÄISCHE PATENTSCHRIFT

(11) **EP 3 129 704 B1**
(45) Veröffentlichungstag und Bekanntmachung des Hinweises auf die Patenterteilung: **28.10.2020**
(21) Anmeldenummer: 15741890.6
(22) Anmeldetag: 01.04.2015
(51) Int. Cl.: F21S 41/143, F21S 41/33, F21S 41/19, F21S 41/47, F21S 41/50, F21S 41/55, F21S 45/48

(54) **BELEUCHTUNGSVORRICHTUNG FÜR FAHRZEUGE**
LIGHTING DEVICE FOR VEHICLES
DISPOSITIF D'ÉCLAIRAGE POUR VÉHICULES

(30) Priorität: 10.04.2014 DE 102014105099
(43) Veröffentlichungstag der Anmeldung: 15.02.2017
(73) Patentinhaber: HELLA GmbH & Co. KGaA, 59552 Lippstadt (DE)
(72) Erfinder: KUGE, Matthias, 33104 Paderborn (DE); QUIRING, Johannes, 59505 Bad Sassendorf (DE)
(86) Internationale Anmeldenummer: PCT/EP2015/057153
(87) Internationale Veröffentlichungsnummer: WO 2015/155088

(56) Entgegenhaltungen:
- CN-A- 103 486 520
- DE-A1-102010 012 137
- FR-A1- 2 896 029
- FR-A1- 2 917 348
- JP-A- 2010 040 322
- JP-A- 2013 178 904
- US-A1- 2005 007 768
- US-B2- 7 086 765

## Beschreibung

Die Erfindung betrifft eine Beleuchtungsvorrichtung für Fahrzeuge.
Aus der DE 103 11 072 B4 ist eine Beleuchtungsvorrichtung für Fahrzeuge bekannt, die einen Reflektor und einen in Hauptabstrahlrichtung der Beleuchtungsvorrichtung vor dem Reflektor angeordneten Lichtquellenträger mit einer Mehrzahl von Lichtquellen aufweist. Die Lichtquellen sind auf einer in Hauptabstrahlrichtung der Beleuchtungsvorrichtung hinteren Seite des Lichtquellenträgers angeordnet, sodass Lichtbündel der Lichtquellen entgegen der Hauptabstrahlrichtung auf den Reflektor treffen, von dem sie aus entsprechend einer vorgegebenen Lichtverteilung nach vorn in Hauptabstrahlrichtung reflektiert werden. Der Lichtquellenträger ist auf einer in Hauptabstrahlrichtung vorne angeordneten Vorderseite mit einem transparenten Abdeckelement versehen, das eine Beschriftung aufweist. Da das Abdeckelement aus einem transparenten Material besteht, wird die Beschriftung durch Eintritt von mittels des Reflektors reflektierten Strahlen an einer Stirnseite des Abdeckelementes hinterleuchtet. Die Lichtquellen sind reihenförmig angeordnet und strahlen die Lichtbündel jeweils auf die gesamt Fläche des Reflektors ab. Für bestimmte Anwendungen ist es wünschenswert, dass unterschiedliche Abschnitte des Reflektors von unterschiedlichen Lichtquellen beaufschlagt werden.

Aus der JP 2010 040322 A ist eine Beleuchtungsvorrichtung mit einem eine Mehrzahl von Lichtquellen aufweisenden Lichtquellenträger sowie einem Reflektor bekannt. Der Lichtquellenträger ist U-förmig ausgebildet, wobei die Lichtquellen außenseitig an gegenüberliegenden Schenkeln des Lichtquellenträgers angeordnet sind. Neben den Lichtquellen verläuft ein Lichtleiter, so dass seitlich von den Lichtquellen abgestrahltes Licht in Hauptabstrahlrichtung nach vorne zu einem Scheitel des Lichtquellenträgers geleitet werden kann, an dem es über eine Maske abgestrahlt wird. Die Maske dient zur Ermöglichung einer Beschriftung der Beleuchtungsvorrichtung. Eine kuppenförmige Blende ist vorgesehen, damit das über den Lichtleiter nach vorne abgeleitete Licht nicht schon vor Erreichen der Maske austreten kann. Die Lichtquellen sind seitlich zu Reflektorabschnitten eines Reflektors angeordnet, wobei der Lichtquellenträger verhindert, dass von einer ersten Lichtquelle abgestrahltes Licht auf einen zweiten Reflektorabschnitt bzw. von einer zweiten Lichtquelle abgestrahltes Licht auf einen ersten Reflektorabschnitt treffen kann.

Aus der US 7 086 765 B2 ist eine Beleuchtungsvorrichtung für Fahrzeuge mit einem Lichtquellenträger zur Aufnahme von Lichtquellen und einem Reflektor bekannt, wobei der Reflektor in Hauptabstrahlrichtung hinter dem Lichtquellenträger angeordnet ist. Der Reflektor weist Reflektorabschnitte auf, die jeweils von durch unterschiedliche Lichtquelle abgestrahlte Lichtbündel erfasst werden. Die Lichtquellen sind jeweils direkt in Hauptabstrahlrichtung vor den jeweiligen Reflektorabschnitten angeordnet. In Hauptabstrahlrichtung vor den Lichtquellen bzw. dem Lichtquellenträger ist ein langgestreckter Lichtleiter vorgesehen, von dessen Mantelfläche stirnseitig des Lichtleiters eingekoppeltes Licht zusätzlich in Hauptabstrahlrichtung abgestrahlt werden kann. Ein den Lichtquellenträger abdeckendes Abdeckelement mit einer Beschriftung sowie eine Blende für mehrere Lichtquellen sind nicht vorgesehen.

Aufgabe der vorliegenden Erfindung ist es daher, eine Beleuchtungsvorrichtung für Fahrzeuge derart weiterzubilden, dass auf effektive Weise unterschiedliche Abschnitte eines Reflektors Lichtbündel unterschiedlicher Lichtquellen reflektieren, wobei die Lichtquellen in Hauptabstrahlrichtung der Beleuchtungsvorrichtung vor dem Reflektor angeordnet sind.

Zur Lösung dieser Aufgabe weist die Erfindung die Merkmale des Patentanspruches 1 auf.

Der besondere Vorteil der Erfindung besteht darin, dass mittels einer Blende eine definierte Zuordnung von Lichtbündeln unterschiedlicher Lichtquellen zu unterschiedlichen Reflektorabschnitten eines Reflektors erzielt wird. Die Reflektorabschnitte liegen auf gegenüberliegenden Seiten einer Mittelebene eines die Lichtquellen tragenden Lichtquellenträgers bzw. zu beiden Seiten einer Mittelebene des Reflektors. Eine vorgegebene Lichtverteilung kann erzeugt werden, wobei Streulicht der Lichtquellen, das nicht auf den zugeordneten bzw. zugewiesenen Reflektorabschnitt treffen würde, sondern auf den benachbarten Reflektorabschnitt, nicht zur Lichtverteilung beitragen kann. Die Reflektorabschnitte können somit eine auf die Anforderungen angepasste Ausbildung aufweisen. Sowohl die Blende als auch das Lichtträgerelement ist durch ein Abdeckelement zur Vorderseite hin abgedeckt, wobei mittels einer auf dem Abdeckelement angeordneten Beschriftung dieses Abdeckelement zu Designzwecken gestaltet sein kann. Bspw. kann die Beschriftung als ein Schriftzug oder als ein Logo ausgebildet sein.

Nach einer bevorzugten Ausführungsform der Erfindung ist mindestens eine auf einer ersten Seite bezüglich einer Mittelebene des Lichtquellenträgers angeordnete erste Lichtquelle und eine auf einer gegenüberliegenden zweiten Seite der Mittelebene des Lichtquellenträgers angeordnete zweite Lichtquelle in einem ersten Abstand zu der Mittelebene angeordnet, während die Blende eine Blendfläche aufweist, an deren gegenüberliegenden Seiten eine erste Blendkante und eine zweite Blendkante angeordnet sind, deren jeweiliger Abstand zu der Mittelebene derart gewählt ist, dass ein von der ersten Lichtquelle ausgesandtes erstes Lichtbündel und ein von der zweiten Lichtquelle ausgesandtes zweites Lichtbündel jeweils auf den ersten Reflektorabschnitt bzw. auf den zweiten Reflektorabschnitt des Reflektors treffen, wobei eine Hell-Dunkel-Grenze des ersten Lichtbündels bzw. zweiten Lichtbündels in der Mittelebene des Reflektors verläuft. Hierdurch wird sichergestellt, dass der erste Reflektorabschnitt und der zweite Reflektorabschnitt das denselben jeweils zugeordnete erste Lichtbündel bzw. zweite Lichtbündel reflektieren.

Nach einer Weiterbildung der Erfindung sind die erste Blendkante und die zweite Blendkante der Blende parallel zu der Mittelebene des Reflektors und parallel zu der Mittelebene des Lichtquellenträgers angeordnet. Die Mittelebene des Reflektors und die Mittelebene des Lichtquellenträgers verlaufen in einer gemeinsamen Ebene, sodass die Beleuchtungsvorrichtung einen symmetrischen Aufbau aufweist.

Nach einer bevorzugten Ausführungsform der Erfindung weist der Lichtquellenträger eine Wärmeableitungsplatte auf, die flächig an einem Halter anliegt. Der Halter weist vorzugsweise einen Befestigungsdom auf, der in einen Durchbruch des Reflektors eingreift und über Befestigungsmittel an einem in Hauptabstrahlrichtung hinter dem Reflektor angeordneten Kühlkörper befestigt ist. Vorteilhaft kann hierdurch die von den Lichtquellen erzeugte Wärme zu einem relativ großen im hinteren Bereich angeordneten Kühlkörper abgeführt werden.

Nach einer Weiterbildung der Erfindung ist der Halter, die Wärmeableitungsplatte und der Kühlkörper aus einem metallischen Material hergestellt, sodass eine relativ schnelle Wärmeableitung gewährleistet ist.

Nach einer Weiterbildung der Erfindung ist das Abdeckelement rastend mit dem Halter verbunden und besteht aus einem nicht transparenten Werkstoff. Das Abdeckelement kann eine gewünschte Gestaltungsform, bspw. Schriftzüge oder Logos aufweisen, ohne dass hierdurch ein störender Einfluss auf die lichttechnische Funktion des Reflektors ausgeübt wird.

Nach einer Weiterbildung der Erfindung weist der Befestigungsdom des Halters eine Bohrung auf, sodass eine an dem Kühlkörper angeordnete Ansteuerelektronik für die Lichtquellen über eine elektrische Verbindungsleitung mit dem Lichtquellenträger verbunden sein kann. Vorteilhaft kann der Befestigungsdom des Halters nicht nur zur Wärmeableitung, sondern auch zur Kabelzuführung und zur Befestigung des Halters an den Kühlkörper genutzt werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

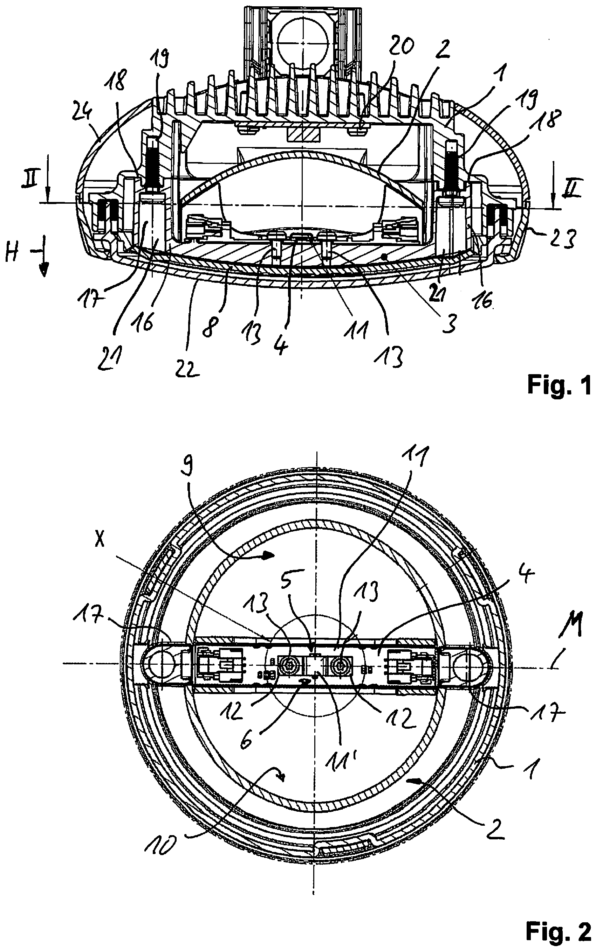

- Fig. 1: einen Horizontalschnitt durch eine Beleuchtungsvorrichtung für Fahrzeuge,
- Fig. 2: einen Schnitt durch die Beleuchtungsvorrichtung gemäß Schnittlinie II-II in Figur 1 und
- Fig. 3: eine vergrößerte Darstellung einer Einzelheit X in Figur 2.

Eine Beleuchtungsvorrichtung für Fahrzeuge kann bspw. als ein Scheinwerfer zur Erzeugung einer Fernlichtverteilung eingesetzt werden.

Die Beleuchtungsvorrichtung weist einen tragenden Kühlkörper 1 auf, an dem ein Reflektor 2 befestigt ist. In Hauptabstrahlrichtung H vor dem Reflektor 2 ist ein Halter 3 angeordnet, an dem auf einer dem Reflektor 2 zugewandten hinteren Seite ein Lichtquellenträger 4 angeordnet ist. Der Lichtquellenträger 4 ist als eine Leiterplatte ausgebildet, der auf einer dem Reflektor 2 zugewandten hinteren Seite zwei LED-Lichtquellen als erste Lichtquelle 5 und eine einzige LED-Lichtquelle als zweite Lichtquelle 6 aufweist. Der Lichtquellenträger 4 ist als eine Leiterplatte ausgebildet und über eine aus einem Metallmaterial bestehende Wärmeableitungsplatte lagerichtig auf der hinteren Seite des Halters 3 positioniert. Der Halter 3 und der Lichtquellenträger 4 sind im Wesentlichen langgestreckt ausgebildet. Sie bilden einen Streifen der sich von einem Rand des Reflektors 2 zu einem gegenüberliegenden Rand desselben erstreckt. Eine Mittelebene M des Halters 3 bzw. des Lichtquellenträgers 4 fällt mit einer Mittelebene M des Reflektors 2 zusammen. In der Mittelebene M verläuft eine optische Achse des Reflektors 2. Die Mittelebene M erstreckt sich quer zur Erstreckungsebene des Halters 3 bzw. des Lichtquellenträgers 4.

Auf einer in Hauptabstrahlrichtung H vorderen Seite des Halters 3 schließt sich ein Abdeckelement 8 an, der die Vorderseite des Halters 3 abdeckt und eine Beschriftung, bspw. ein Logo oder einen Schriftzug aufweist. Das Abdeckelement 8 kann durch Verrastung mit dem Halter 3 verbunden sein.

Der Reflektor 2 weist einen ersten Reflektorabschnitt 9 auf, der mit den ersten Lichtquellen 5 zusammenwirkt. Ferner weist der Reflektor 2 einen zweiten Reflektorabschnitt 10 auf, der mit der zweiten Lichtquelle 6 zusammenwirkt. Der Reflektor 2 weist eine kreisförmige vordere Randkontur auf. Der erste Reflektorabschnitt 9 bildet eine erste Reflektorhälfte, während der zweite Reflektorabschnitt 10 eine zweite Reflektorhälfte bildet.

Damit auf den ersten Reflektorabschnitt 9 ausschließlich ein Lichtbündel (erstes Lichtbündel) der ersten Lichtquellen 5 trifft und kein Streulicht der zweiten Lichtquelle 6 bzw. damit auf den zweiten Reflektorabschnitt 10 ausschließlich ein Lichtbündel (zweites Lichtbündel) der zweiten Lichtquelle 6 und kein Streulicht der ersten Lichtquelle 5 trifft, ist dem Lichtquellenträger 4 eine Blende 11 zugeordnet. Die Blende 11 ist im Querschnitt hutförmig ausgebildet und weist gegenüberliegende Befestigungsflansche 12 auf, die durch Verschraubung 13 mit dem Lichtquellenträger 4 bzw. dem Halter 3 verbunden ist.

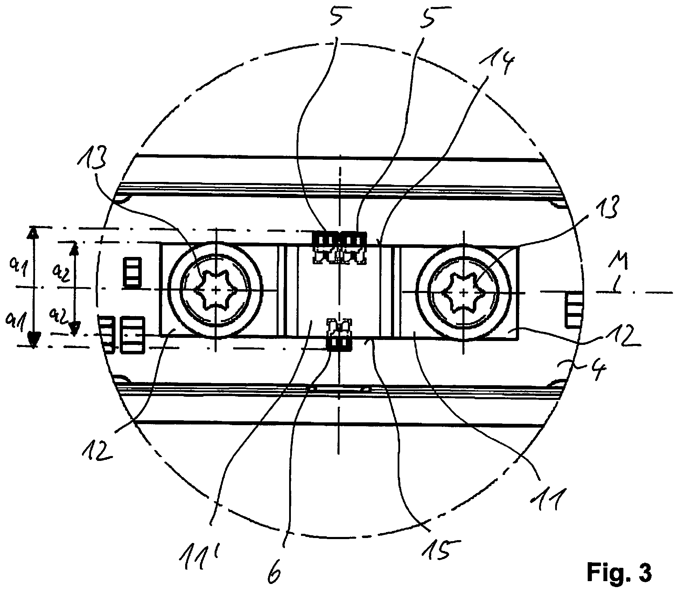

Die Blende 11 überdeckt mit einer Blendfläche 11' die Lichtquellen 5, 6 in Projektion zu einer senkrecht zur optischen Achse verlaufenden Ebene teilweise. Wie aus Figur 3 zu erkennen ist, sind die als LED-Chips ausgebildeten Lichtquellen 5, 6 teilweise in Projektionsrichtung sichtbar. Die ersten Lichtquellen 5 und die zweite Lichtquelle 6 weisen jeweils einen Außenabstand a1 zu der Mittelebene M auf. Die Blende 11 weist eine teilweise die ersten Lichtquellen 5 überdeckende erste Blendkante 14 und eine die teilweise zweite Lichtquelle 6 überdeckende zweite Blendkante 15 auf, die jeweils einen Abstand a2 zu der Mittelebene M aufweisen. Der Abstand a2 der Blendkanten 14, 15 zu der Mittelebene M ist kleiner als der Außenabstand a1 der Lichtquellen 5, 6 zu der Mittelebene M. Der Abstand a2 der Blendkanten 14, 15 zu der Mittelebene M ist so gewählt, dass das von den ersten Lichtquellen 5 abgesandte Lichtbündel ausschließlich auf den ersten Reflektorabschnitt 9, aber nicht auf den zweiten Reflektorabschnitt 10 trifft. Der Abstand a2 der zweiten Blendkante zu der Mittelebene M bzw. die zweite Blendkante 5 ist derart gewählt, dass ein von der zweiten Lichtquelle 6 abgestrahltes Lichtbündel ausschließlich auf den zweiten Reflektorabschnitt 10, aber nicht auf den ersten Reflektorabschnitt 9 trifft. Die erste Blendkante 14 und die zweite Blendkante 15 bewirken eine Hell-Dunkel-Grenze der jeweiligen auf den Reflektor 2 treffenden Lichtbündel, wobei die Hell-Dunkel-Grenze entlang der Mittelebene M verläuft.

Die erste Blendkante 14 und die zweite Blendkante 15 verlaufen parallel zueinander bzw. parallel zu der Mittelebene M.

Der erste Reflektorabschnitt 9 und der zweite Reflektorabschnitt 10 weisen jeweils Freiformflächen als Reflektorflächen auf, sodass das an denselben reflektierte erste Lichtbündel und zweite Lichtbündel sich zu einer Fernlichtverteilung überlagern.

Damit eine Wärmableitung von den Lichtquellen 5, 6 in Richtung des Kühlkörpers 1 erfolgen kann, ist der Halter 3 aus einem metallischen Druckgusskörper (bspw. Aluminiumdrückgusskörper) oder aus einem metallischen Strangpresskörper hergestellt, der aus der Erstreckungsebene des Halters 3 gegenüberliegende Befestigungsdome 16 aufweist, die in einen Durchbruch 17 des Reflektors 2 eingreifen und die mit einem Endrand 18 an dem Kühlkörper 1 anliegen. Der Halter 3 ist über als Schrauben 19 ausgebildete Befestigungsmittel mit dem Kühlkörper 1 verbunden. Hierzu weist der Befestigungsdom 16 des Halters 3 entsprechende Bohrungen auf.

Das Abdeckelement 8 ist aus einem nicht transparenten Material hergestellt, bspw. aus einem Kunststoffmaterial.

Der Kühlkörper 1 weist auf einer Vorderseite eine Ansteuerelektronik 20 zur Ansteuerung der Lichtquellen 5, 6 auf. Die Ansteuerelektronik 20 ist über eine elektrische Verbindungsleitung mit dem Lichtquellenträger 5 verbunden. Die elektrische Verbindungsleitung verläuft durch den Durchbruch 17 des Reflektors 2 bzw. einer Bohrung 21 des Auslegers 16. Die elektrische Verbindungsleitung wird vorderseitig des Halters 3 durch das Abdeckelement 8 verdeckt.

Zur Montage der Beleuchtungsvorrichtung wird zuerst die Ansteuerelektronik 20 auf einer Vorderseite des Kühlkörpers 1 befestigt. Die an der Ansteuerelektronik 20 angeschlossene elektrische Verbindungsleitung wird durch die beidseitigen Durchbrüche 17 des Reflektors 2 gesteckt, sodass dann der Reflektor 2 mit dem Kühlkörper 1 verbunden werden kann. Hierzu weist der Kühlkörper 1 ein Klebebett auf, in das die Stege des Reflektors 2 eingreifen und stoffschlüssig mit dem Kühlkörper 1 verbunden sind. Der Lichtquellenträger 4, der die Wärmeableitungsplatte aufweist, wird durch Verschraubung an der Rückseite des Halters 3 befestigt. Die elektrische Verbindungsleitung wird an dem Lichtquellenträger 4 kontaktiert. Nachfolgend wird der Halter 3 nach Einstecken der gegenüberliegenden Befestigungsdome 16 durch den Durchbruch 17 des Reflektors 2 an dem Kühlkörper 1 mittels der Verschraubung 19 befestigt. Danach wird das Abdeckelement 8 durch Verrastung an der Vorderseite des Halters 3 befestigt. Endbereiche der elektrischen Verbindungsleitung verlaufen in einem zwischen der Vorderseite des Halters 3 und dem Abdeckelement 8 gebildeten Hohlraum. Nachfolgend wird eine Lichtscheibe 22 in eine weiteres Klebebett des Kühlkörpers 1 eingelegt, sodass diese stoffschlüssig mit dem Kühlkörper verbunden ist. Nachfolgend wird ein Designring 23 auf dem Reflektor 2 aufgesetzt und mit demselben verrastet. Anschließend wird von einer Rückseite ein Gehäuse24 aufgesetzt, sodass dieser an dem Designring 23 einrasten kann. Der Gehäuse 24 ist über nicht dargestellte Schrauben an dem Kühlkörper 1 befestigt.

### Bezugszeichenliste

- 1: Kühlkörper
- 2: Reflektor
- 3: Halter
- 4: Lichtquellenträger
- 5: Erste Lichtquelle
- 6: Zweite Lichtquelle
- 8: Abdeckelement
- 9: Erster Reflektorabschnitt
- 10: Zweiter Reflektorabschnitt
- 11,: Blende
- 11': Blendfläche
- 12: Befestigungsflansche
- 13: Verschraubung
- 14: Erste Blendkante
- 15: Zweite Blendkante
- 16: Befestigungsdom
- 17: Durchbruch
- 18: Endrand
- 19: Schrauben
- 20: Ansteuerelektronik
- 21: Bohrung
- 22: Lichtscheibe
- 23: Designring
- 24: Gehäuse

- H: Hauptabstrahlrichtung
- M: Mittelebene
- a1, a2: Abstand

## Patentansprüche

1. Beleuchtungsvorrichtung für Fahrzeuge mit einem Lichtquellenträger (4) zur Aufnahme einer Mehrzahl von Lichtquellen (5, 6) und mit einem Reflektor (2), der in Hauptabstrahlrichtung (H) der Beleuchtungsvorrichtung hinter dem Lichtquellenträger (4) angeordnet ist zum Reflektieren von einem durch die Mehrzahl der Lichtquellen (5, 6) abgestrahlten Lichtbündel in Hauptabstrahlrichtung (H) nach vorn, wobei die Lichtquellen (5, 6) auf eine in Hauptabstrahlrichtung (H) hinteren Seite des Lichtquellenträgers (4) angeordnet sind, wobei in Hauptabstrahlrichtung (H) vor dem Lichtquellenträger (4) ein Abdeckelement (8) angeordnet ist, **dadurch gekennzeichnet,**
- **dass** das Abdeckelement (8) mit einer Beschriftung versehen ist,
- **dass** mindestens eine erste Lichtquelle (5) auf einer ersten Seite einer Mittelebene (M) des Lichtquellenträgers (4) und mindestens eine zweite Lichtquelle (6) auf einer zweiten Seite der Mittelebene (M) des Lichtquellenträgers (4) angeordnet sind,
- **dass** der Reflektor (2) auf der ersten Seite der Mittelebene (M) des Lichtquellenträgers (4) einen ersten Reflektorabschnitt (9) und auf der zweiten Seite der Mittelebene (M) des Lichtquellenträgers (4) einen zweiten Reflektorabschnitt (10) aufweist,
- **dass** der mindestens ersten Lichtquelle (5) und der mindestens zweiten Lichtquelle (6) eine Blende (11) mit einer Blendfläche (11') enthaltend eine der ersten Lichtquelle (5) zugeordneten ersten Blendkante (14) und einer der zweiten Lichtquelle (6) zugeordneten zweiten Blendkante (15) zugeordnet ist, derart, dass ein von der ersten Lichtquelle (5) abgesandtes Lichtbündel ausschließlich auf den ersten Reflektorabschnitt (9) und ein von der mindestens zweiten Lichtquelle (6) abgesandtes Lichtbündel ausschließlich auf dem zweiten Reflektorabschnitt (10) trifft, und
- **dass** der Lichtquellenträger (4) als eine Leiterplatte ausgebildet ist.

2. Beleuchtungsvorrichtung nach Anspruch 1, **dadurch gekennzeichnet, dass** die mindestens erste Lichtquelle (5) und die mindestens zweite Lichtquelle (6) in einem Abstand (a1) zu der Mittelebene (M) des Lichtquellenträgers (4) angeordnet sind und dass die erste Blendkante (14) und die zweite Blendkante (15) der Blende (11) jeweils in einem solchen Abstand (a2) zu der Mittelebene (M) des Lichtquellenträgers (4) angeordnet sind, dass das von der mindestens ersten Lichtquelle (5) ausgesandte Lichtbündel und das von der mindestens zweiten Lichtquelle (6) ausgesandte Lichtbündel auf den ersten Reflektorabschnitt (9) bzw. auf den zweiten Reflektorabschnitt (10) treffen, wobei eine Hell-Dunkel-Grenze der beiden Lichtbündel in einer Mittelebene (M) des Reflektors (2) verläuft.

3. Beleuchtungsvorrichtung nach Anspruch 1 oder 2, **dadurch gekennzeichnet, dass** die erste Blendkante (14) und die zweite Blendkante (15) parallel zu der Mittelebene (M) des Reflektors (2) bzw. des Lichtquellenträgers (4) verlaufen.

4. Beleuchtungsvorrichtung nach einem der Ansprüche 1 bis 3, **dadurch gekennzeichnet, dass** der Lichtquellenträger (4) eine Wärmeableitungsplatte aufweist, der an einem Halter (3) flächig anliegt.

5. Beleuchtungsvorrichtung nach einem der Ansprüche 1 bis 4, **dadurch gekennzeichnet, dass** der Halter (3) einen in einen Durchbruch (17) des Reflektors (2) eingreifenden Befestigungsdom (16) aufweist, der über Befestigungsmittel mit einem Kühlkörper (1) verbunden ist, wobei der Reflektor (2) zwischen dem Kühlkörper (1) und dem Halter (3) angeordnet ist.

6. Beleuchtungsvorrichtung nach Anspruch 5, **dadurch gekennzeichnet, dass** der Halter (3) und der Kühlkörper (1) aus einem metallischen Material bestehen.

7. Beleuchtungsvorrichtung nach einem der Ansprüche 1 bis 6, **dadurch gekennzeichnet, dass** der Halter (3) langgestreckt ausgebildet ist, wobei eine Längsmittelebene(M) des Halters (3) mit der Mittelebene (M) des Reflektors (2) zusammenfällt.

8. Beleuchtungsvorrichtung nach einem der Ansprüche 1 bis 7, **dadurch gekennzeichnet, dass** der erste Reflektorabschnitt (9) und der zweite Reflektorabschnitt (10) jeweils Freiformflächen aufweisen zur Umlenkung des von der mindestens ersten Lichtquelle (5) abgesandten Lichtbündels bzw. des von der mindestens zweiten Lichtquelle (6) abgesandten Lichtbündels entsprechend einer Fernlichtverteilung.

9. Beleuchtungsvorrichtung nach einem der Ansprüche 1 bis 8, **dadurch gekennzeichnet, dass** das Abdeckelement (8) rastend mit dem Halter(3) verbunden ist und dass das Abdeckelement (8) aus einem nicht transparenten Material besteht.

10. Beleuchtungsvorrichtung nach einem der Ansprüche 1 bis 9, **dadurch gekennzeichnet, dass** auf dem Kühlkörper (1) eine Ansteuerelektronik (20) für die Lichtquellen (5, 6) befestigt ist und dass eine elektrische Verbindungsleitung von der Ansteuerelektronik(20) über den Durchbruch (17) des Reflektors (2) und eine Bohrung (21) des Befestigungsdoms (16) zu dem Lichtquellenträger (4) führt, wobei ein Endbereich der elektrischen Verbindungsleitung in einem sich zwischen einer Vorderseite des Halters (3) und dem Abdeckelement (8) bildenden Hohlraums angeordnet ist.

## Claims

1. Illumination device for vehicles with a light source carrier for (4) holding a plurality of light sources (5, 6) and with a reflector (2) that is arranged behind, in the main beam direction (H) of the illumination device, the light source holder (4) for the purpose of reflecting a light bundle emitted by the plurality of light sources (5, 6) forwards, in the main beam direction, where the light sources (5, 6) are arranged on a rear, in the direction of the main beam direction (H), side of the light source carrier (4), whereby in front of, in the direction of the main beam direction (H), the light source carrier (4) a covering element (8) is arranged, **characterized in that**
- the covering element (8) has been provided with lettering
- at least one light source (5) on a first side of a central plane (M) of the light source carrier (4) and at least one second light source (6) is arranged on a second side of the central plane (M) of the light source carrier (4)
- the reflector (2) features on the first side of the central plane (M) of the light source carrier (4) a first reflector section (9) and on the second side of the central plane (M) of the light source carrier (4) a second reflector section (10)
- a cover (11) is allocated to the at least one first light source (5) and the at least one second light source (6) with a cover area (11') comprising a first cover edge (14) allocated to one of the first light sources (5) and a second cover edge (15) allocated to one of the second light sources (6) such that a light beam emitted by the first light source (5) hits exclusively the first reflector section (9) and a light beam emitted by the at least one second light source (6) exclusively hits the second reflector section (10) and
- the light source carrier (4) takes the form of a printed circuit board.

2. Illumination device in accordance with Claim 1, **characterized in that** the at least one first light source (5) and the at least one second light source (6) are arranged at a distance (a1) to the central plane (M) of the light source carrier (4) and the first cover edge (14) and the second cover edge (15) of the cover (11) are each arranged at such a distance (a2) from the central plane (M) of the light source carrier (4) such that the light beam emitted by the at least one first light source (5) and the light beam emitted by the at least one second light source (6) hit the first reflector section (9) and the second reflector section (10), respectively, where a light-dark cut-off line of the two light beams runs in a central plane (M) of the reflector (2).

3. Illumination device in accordance with Claim 1 or 2, **characterized in that** the first cover edge (14) and the second cover edge (15) run parallel to the central plane (M) of the reflector (2) and the light source carrier (4), respectively.

4. Illumination device in accordance with one of Claims 1 through 3, **characterized in that** the light source carrier (4) features a heat dissipation plate that contacts a holder (3) over an area.

5. Illumination device in accordance with one of Claims 1 through 4, **characterized in that** the holder (3) features a fastening dome (16) engaging through an aperture (17) of the reflector (2) that is connected by means of fastening material with a heat sink (1), where the reflector (2) is arranged between the heat sink (1) and the holder (3).

6. Illumination device in accordance with Claim 5, **characterized in that** the holder (3) and the heat sink (1) are made of a metallic material.

7. Illumination device in accordance with one of Claims 1 through 6, **characterized in that** the holder (3) is designed to be elongated, where one longitudinal central plane (M) of the holder (3) coincides with the central plane (M) of the reflector (2).

8. Illumination device in accordance with one of Claims 1 through 7, **characterized in that** the first reflector section (9) and the second reflector section (10) each feature free-form areas for deflecting the light beam emitted from the at least one first light source (5) and the light beam emitted by the at least one second light source (6), respectively, corresponding to a high-beam distribution.

9. Illumination device in accordance with one of Claims 1 through 8, **characterized in that** the covering element (8) is connected to the holder (3) with a snap connector and that the covering element (8) consists of a non-transparent material.

10. Illumination device in accordance with one of Claims 1 through 9, **characterized in that** a driver electronics unit (20) for the light sources (5, 6) is fastened to the heat sink (1) and that an electric connector cable leads from the driver electronics unit (20) through the aperture (17) of the reflector (2) and a bore (21) in the fastening dome (16) to the light source carrier (4), where one end section of the electric connecting cable is arranged in a hollow area formed between one front side of the holder (3) and the covering element (8).

## Revendications

1. Dispositif d'éclairage pour véhicules comprenant un support de sources lumineuses (4) pour recevoir plusieurs sources lumineuses (5, 6) et un réflecteur (2) disposé derrière le support de sources lumineuses (4) dans le sens de rayonnement principal (H) du dispositif d'éclairage pour réfléchir le faisceau lumineux émis par les sources lumineuses (5, 6), celles-ci étant disposées sur un côté du support de sources lumineuses (4) à l'arrière dans le sens de rayonnement principal (H), un élément de couverture (8) étant disposé devant le support de sources lumineuses (4) dans le sens de rayonnement principal (H), **caractérisé en ce que**
- l'élément de couverture (8) est doté d'un repérage,
- au moins une première source lumineuse (5) est disposée sur un premier côté du plan médian (M) du support de sources lumineuses (4) et au moins une seconde source lumineuse (6) sur un second côté du plan médian (M) du support de sources lumineuses (4),
- le réflecteur (2) comporte une première section réfléchissante (9) sur le premier côté du plan médian (M) du support de sources lumineuses (4) et une deuxième section réfléchissante (10) sur le deuxième côté du plan médian (M) du support de sources lumineuses (4),
- au moins la première source lumineuse (5) et au moins la deuxième source lumineuse (6) sont associées à un cache (11) avec une surface (11') dont un premier bord de cache (14) est associé à la première source lumineuse (5) et un deuxième bord de cache (15) est associé à la deuxième source lumineuse (6), de telle sorte qu'un faisceau lumineux émis par la première source lumineuse (5) ne touche que la première section réfléchissante (9) et qu'un faisceau lumineux émis par la deuxième source lumineuse (6) ne touche que la deuxième section réfléchissante (10), et **en ce que**
- le support de sources lumineuses (4) est conçu comme un circuit imprimé.

2. Dispositif d'éclairage selon la revendication 1, **caractérisé en ce qu'**au moins la première source lumineuse (5) et au moins la deuxième source lumineuse (6) sont disposées à une distance (a1) du plan médian (M) du support de sources lumineuses (4) et **en ce que** le premier bord de cache (14) et le deuxième bord de cache (15) du cache (11) sont disposés chacun à une telle distance (a2) du plan médian (M) du support de sources lumineuses (4) que le faisceau lumineux émis au moins par la première source lumineuse (5) et le faisceau lumineux émis au moins par la deuxième source lumineuse (6) touchent la première section réfléchissante (9) ou la deuxième section réfléchissante (10), sachant qu'une ligne de coupure clair/obscur des deux faisceaux lumineux s'étend dans un plan médian (M) du réflecteur (2).

3. Dispositif d'éclairage selon la revendication 1 ou 2, **caractérisé en ce que** le premier bord de cache (14) et le deuxième bord de cache (15) s'étendent parallèlement au plan médian (M) du réflecteur (2) et/ou du support de sources lumineuses (4).

4. Dispositif d'éclairage selon l'une des revendications 1 à 3, **caractérisé en ce que** le support de sources lumineuses (4) possède une plaque de dissipation de chaleur qui repose à plat contre un support (3).

5. Dispositif d'éclairage selon l'une des revendications 1 à 4, **caractérisé en ce que** le support (3) présente un dôme de fixation (16) s'engageant dans une ouverture (17) du réflecteur (2), lequel dôme est relié à un dissipateur thermique (1) sur lequel il est fixé, le réflecteur (2) étant disposé entre le dissipateur thermique (1) et le support (3).

6. Dispositif d'éclairage selon la revendication 5, **caractérisé en ce que** le support (3) et le dissipateur thermique (1) sont constitués d'un matériau métallique.

7. Dispositif d'éclairage selon l'une des revendications 1 à 6, **caractérisé en ce que** le support (3) est allongé, un plan médian longitudinal (M) du support (3) coïncidant avec le plan médian (M) du réflecteur (2).

8. Dispositif d'éclairage selon l'une des revendications 1 à 7, **caractérisé en ce que** la première section réfléchissante (9) et la deuxième section réfléchissante (10) présentent chacune des surfaces à forme libre pour dévier le faisceau lumineux émis au moins par la première source lumineuse (5) ou le faisceau lumineux émis au moins par la deuxième source lumineuse (6), respectivement, en fonction de la répartition du faisceau de route.

9. Dispositif d'éclairage selon l'une des revendications 1 à 8, **caractérisé en ce que** l'élément de couverture (8) est relié par encliquetage au support (3) et que l'élément de couverture (8) est constitué d'un matériau non transparent.

10. Dispositif d'éclairage selon l'une des revendications 1 à 9, **caractérisé en ce qu'**une unité de commande électronique (20) pour les sources lumineuses (5, 6) est fixée au dissipateur thermique (1) et **en ce qu'**un câble de raccordement électrique mène de l'unité de commande électronique (20) au support de source lumineuse (4) via l'ouverture (17) du réflecteur (2) et un perçage (21) du dôme de fixation (16), une zone d'extrémité du câble de raccordement électrique étant disposée dans une cavité formée entre une face avant du support (3) et l'élément de recouvrement (8).
